# EUROPEAN PATENT APPLICATION

(11) **EP 2 466 860 A2**
(43) Date of publication of application: **20.06.2012**
(21) Application number: 11009701.1
(22) Date of filing: 08.12.2011
(51) Int. Cl.: H04M 1/725, H04M 1/60

(54) **Headset, method for controlling usage of headset, and terminal**

(30) Priority: 17.12.2010 CN 201010593744; 06.12.2011 US 201113311588
(71) Applicant: Sony Ericsson Mobile Communications AB, 221 88 Lund (SE)
(72) Inventor: Wu, Xin, Chaoyang District Beijing 100102 (CN); Zhang, Ye, Chaoyang District Beijing 100102 (CN); Liu, Dan, Chaoyang District Beijing 100102 (CN)
(74) Representative: Banzer, Hans-Jörg

(57) **Abstract**

The present invention provides a headset, a method for controlling usage of the headset and a terminal. The headset includes a memory configured to store an authentication password; and a usage control unit configured to send, after a connection is established between the headset and a terminal, a request of inputting authentication password to the terminal when the headset is in a protected state, receive an authentication password inputted from the terminal, authenticate the received authentication password using the stored authentication password, and control an execution of a predetermined function of the headset based on an authentication result. The present invention protects the headset by limiting the usage right of the headset, so as to reduce the probability of headset loss.

## Description

### Field of the Invention

The present invention relates to a headset, and particularly, to a headset, a method for controlling usage of the headset, and a terminal using the headset.

### Background of the Invention

With the increasing popularity of portable electronic devices such as mobile phone, Personal Digital Assistant (PDA) and media player, auxiliary electronic devices such as the headset are applied more and more widely. The headset includes wired headset and wireless headset (e.g., Bluetooth headset). Either the wired headset or the Bluetooth headset usually has the functions of hand-free phone answering, hang-up, listening to music played by the terminal, etc. Recently, the headset having more functions (e.g., volume control, voice dialing, caller identification, media playing, USB disk function that stores data using USB interface or Bluetooth, etc.) have been available in the market to meet the increasing demand of the terminal user. The headset has become a very important and necessary auxiliary device for people to use the terminal, and once the headset is lost, great inconveniences will be caused to the user. However, as the headset has a small size and is very popular, and its usage right is not limited, the headset is easy to be lost or stolen.

### Summary of the Invention

How to improve the design of the headset to protect the headset from being stolen easily is a technical problem to be solved at present.

According to the invention, a headset as defined in claim 1, a method for controlling usage of a headset as defined in claim 7, and a terminal as defined in claim 12 are provided. The dependent claims define preferred embodiments of the invention. The present invention is proposed in view of the above problems in the prior art. Aspects of the present invention relate to a headset, a method for controlling usage of the headset and a terminal using the headset that overcome or more problems existed due to the limitation of the prior art, and provide a beneficial choice.

According to one aspect of the present invention, a headset includes: a memory configured to store an authentication password; and a usage control unit configured to send, after a connection is established between the headset and a terminal, a request of inputting authentication password to the terminal when the headset is in a protected state, receive an authentication password inputted from the terminal, authenticate the received authentication password using the stored authentication password, and control an execution of a predetermined function of the headset based on an authentication result.

According to another aspect, the usage control unit includes a triggering unit configured to send, after the connection is established between the headset and the terminal, the request of inputting authentication password to the terminal when the headset is in the protected state; and a control subunit configured to receive the authentication password inputted from the terminal, perform an authentication by comparing the received authentication password with the stored authentication password, and allow the headset to execute the predetermined function when the authentication succeeds, or forbid the headset to execute the predetermined function when the authentication fails.

According to another aspect, the triggering unit is further configured to output an indication signal to the control subunit when the headset is in an unprotected state, and the control subunit allows the headset to execute the predetermined function according to the indication signal.

According to another aspect, the memory further stores headset state information, which is the protected state or the unprotected state.

According to another aspect, the usage control unit further includes a setting unit configured to modify the stored headset state information when the control subunit succeeds in the authentication or the headset state information is the unprotected state.

According to another aspect, the headset further includes a recording unit configured to write an identity of the terminal into a terminal identity list stored in the memory, when the authentication succeeds.

According to another aspect, the usage control unit further includes a state determination unit configured to identify, after the connection is established between the headset and the terminal, whether the identity of the terminal currently establishing the connection has been stored in the terminal identity list, and if not, determine a current state of the headset as the protected state.

According to another aspect, the memory stores a plurality of authentication passwords; and the usage control unit is further configured to determine the authentication as successful when the received authentication password matches one of the plurality of authentication passwords stored, and then allow the headset to execute the predetermined function.

According to another aspect, the memory stores a plurality of authentication passwords, each corresponding to a usage right; and the usage control unit is further configured to determine the authentication as successful when the received authentication password matches one of the plurality of authentication passwords stored, and control the execution of the predetermined function of the headset according to a usage right corresponding to the matched authentication password.

According to another aspect, the headset further includes an indication unit configured to send information indicating that the authentication is successful or failed to the terminal.

According to another aspect of the present invention, a method for controlling usage of a headset is provided, including: establishing a connection between the headset and a terminal; after the connection is established, sending a request of inputting authentication password to the terminal when the headset is in a protected state; receiving an authentication password inputted from the terminal; and authenticating the received authentication password using an authentication password pre-stored by a memory, and controlling an execution of a predetermined function of the headset based on an authentication result.

According to another aspect, the step of authenticating includes authenticating by comparing the received authentication password with the pre-stored authentication password; and allowing the headset to execute the predetermined function when the authentication succeeds, or forbidding the headset to execute the predetermined function when the authentication fails.

According to another aspect, the method further includes directly allowing the headset to execute the predetermined function when the headset is in an unprotected state.

According to another aspect, the method further includes storing headset state information, which is the protected state or the unprotected state.

According to another aspect, the method further includes modifying the headset state information stored when the authentication succeeds in the step of authenticating or the headset state information is the unprotected state.

According to another aspect, the method further includes writing an identity of the terminal into a terminal identity list stored in the memory, when the authentication succeeds.

According to another aspect, the method further includes, after the connection is established between the headset and the terminal, identifying whether the identity of the terminal currently establishing the connection has been stored in the terminal identity list, and if not, determining a current state of the headset as the protected state.

According to another aspect, a plurality of authentication passwords are pre-stored; and in the step of authenticating, determining the authentication as successful when the received authentication password matches one of the plurality of authentication passwords stored in the memory, and then allowing the headset to execute the predetermined function.

According to another aspect, a plurality of authentication passwords are pre-stored, each corresponding to a usage right; and in the step of authenticating, determining the authentication as successful when the received authentication password matches one of the plurality of authentication passwords stored, and controlling the execution of the predetermined function of the headset according to a usage right corresponding to the matched authentication password.

According to another aspect, the method further includes sending information indicating that the authentication is successful or failed to the terminal.

According to another aspect, the predetermined function includes at least one of phone answering, hang-up, volume control, caller identification, audio output, media playing, and data reading and writing.

According to another aspect of the present invention, a terminal is provided, including: a receiving unit configured to receive a request of inputting authentication password from a headset after a connection is established between the headset and a terminal; an input unit configured to input the authentication password; and a sending unit configured to send the inputted authentication password to the headset.

According to another aspect, the receiving unit is further configured to receive from the headset information indicating that an authentication is successful.

According to another aspect, the terminal further includes a setting unit configured to modify headset state information stored in a memory of the headset into an unprotected state when the receiving unit receives the information indicating that the authentication is successful.

According to another aspect, the setting unit is further configured to modify the headset state information stored in the memory of the headset into a protected state when the headset state information is the unprotected state.

According to another aspect, the setting unit is further configured to modify or set an authentication password and store the modified or set authentication password in the memory of the headset, when the receiving unit receives the information indicating that the authentication is successful or the headset state information is the unprotected state.

According to another aspect, the setting unit modifies or sets a plurality of authentication passwords.

According to another aspect, the setting unit is further configured to modify or set usage rights of predetermined function of the headset corresponding to respective authentication passwords.

According to another aspect, the predetermined function includes at least one of phone answering, hang-up, volume control, caller identification, audio output, media playing, and data reading and writing.

These and other aspects and features of the present invention will be clearer with reference to the following descriptions and drawings. The embodiments of the present invention are detailedly disclosed in the following descriptions and drawings for the convenience of understanding the ways for implementing the present invention. But it shall be appreciated that the scope of the present invention is not limited by these embodiments, and the present invention covers all changes, improvements and equivalents within the scope of the claims.

Features described and/or illustrated with respect to one embodiment can be used in one or more other embodiments in a same or similar way, and/or combine with or replace features in other embodiments.

To be noted, the term "include/comprise/have" herein refers to existence of feature, component, step and assembly, not excluding existence or addition of one or more other features, components, steps, assemblies or a combination thereof.

Many aspects of the present invention can be understood better with reference to the following drawings. The constituent parts of the drawings are not necessarily drafted in proportion or to scale, but are presented just for illustrating the present invention more clearly. For the convenience of illustrating and describing some parts of the present invention, and promoting the understanding of the embodiments, some parts of the drawings may be enlarged, e.g., enlarging those parts with respect to other parts in an exemplary apparatus practically manufactured according to the present invention. Elements and features described in a drawing or embodiment of the present invention can be combined with elements and features illustrated in one or more other drawings or embodiments. In addition, same or corresponding reference signs are used to represent same or corresponding constituent parts in all the drawings, and they also can be used to represent same or corresponding constituent parts in more than one of the embodiments.

It shall be appreciated that the above general descriptions and the following detailed descriptions of the present invention are just exemplary and explanatory, and they just intend to provide further understandings of the invention for which protection is sought.

### Brief Description of the Drawings

The included drawings constitute a part of the Specification, for illustrating the embodiments of the present invention and interpreting the present invention together with the text description. The drawings and the following description present some embodiments to provide an understanding of the present invention.
Fig. 1 illustrates a schematic structure of a headset according to an exemplary embodiment of the present invention;
Fig. 2 illustrates a schematic structure of a headset according to another exemplary embodiment of the present invention;
Fig. 3 illustrates a schematic block diagram of a headset according to another exemplary embodiment of the present invention;
Fig. 4 illustrates a schematic block diagram of a headset according to another exemplary embodiment of the present invention;
Fig. 5 illustrates a schematic block diagram of a usage control unit in Fig. 1;
Fig. 6 illustrates another schematic block diagram of the usage control unit;
Fig. 7 illustrates a flowchart that sets an authentication password according to an exemplary embodiment of the present invention;
Fig. 8 illustrates a flowchart that sets an authentication password according to another exemplary embodiment of the present invention; and
Fig. 9 illustrates a schematic structure of a terminal according to an exemplary embodiment of the present invention.

### Detailed Description of the Embodiments

The present invention will be detailedly described below with reference to the drawings, which provide illustrative embodiments of the invention. The drawings illustrate the examples of the illustrative embodiments of the present invention. Throughout the drawings, the same or similar part is represented with the same or similar reference sign. Also, primed reference signs designate parts that are similar to other parts that are designated by unprimed reference numerals.

To be noted, in order to avoid the present invention from being vague due to unnecessary details, the drawings only illustrate device structure and/or processing step(s) closely associated with the solution of the present invention, and other details not necessary for understanding the present invention are omitted but will be understood by a person having ordinary skill in the art.

In the prior art, the usage right of a headset is not limited at all, and any person, even one picking or stealing the headset, has the right to use it. Thus the headset is easy to be stolen.

In the present invention, the headset is protected by limiting its usage right, so as to solve the above problem effectively. In one exemplary embodiment, the identification of the headset user is authenticated by means of the authentication password, so as to prevent the headset being used by any user having no usage right, i.e., to protect the headset.

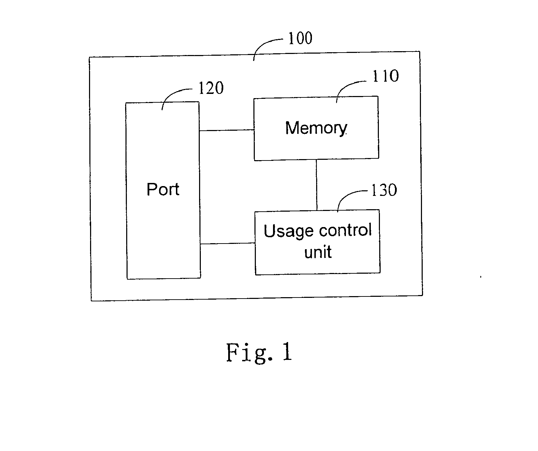

Fig. 1 is a schematic diagram of a headset 100 according to an exemplary embodiment of the present invention. In this embodiment, the headset 100 may have at least one of the common functions of prior headsets, e.g., phone answering, hang-up, audio output, volume control, voice dialing, caller identification, media playing, USB disk function that stores data using USB interface or Bluetooth technique, etc. These functions are just exemplary, and the headset of the present invention is not limited thereto and may have other functions. Since the detailed structures of the components for realizing the above functions are known by a person skilled in the art, such components is omitted in Fig. 1. The detailed descriptions of those components are also omitted, and only some other components closely related to the present invention are illustrated. In Fig. 1, the headset 100 includes a memory 110, a port 120 and a usage control unit 130.

The memory 110 is configured to store one or more authentication passwords. The authentication password may consist of, but not limited to, digits, symbols, a combination of digits and symbols, sound (e.g., the user's sound) or image (e.g., biological feature such as facial image, fingerprint, etc.). In addition, the memory 110 may store other data, for example, it serves as a USB disk to store any suitable information (e.g., message, song, user's personal information, etc.). The memory 110 may be or may include a portion that is a non-transitory memory. The memory may store operating software, code or logic for carrying out one or more of the various functions, methods, steps and so on that are described herein.

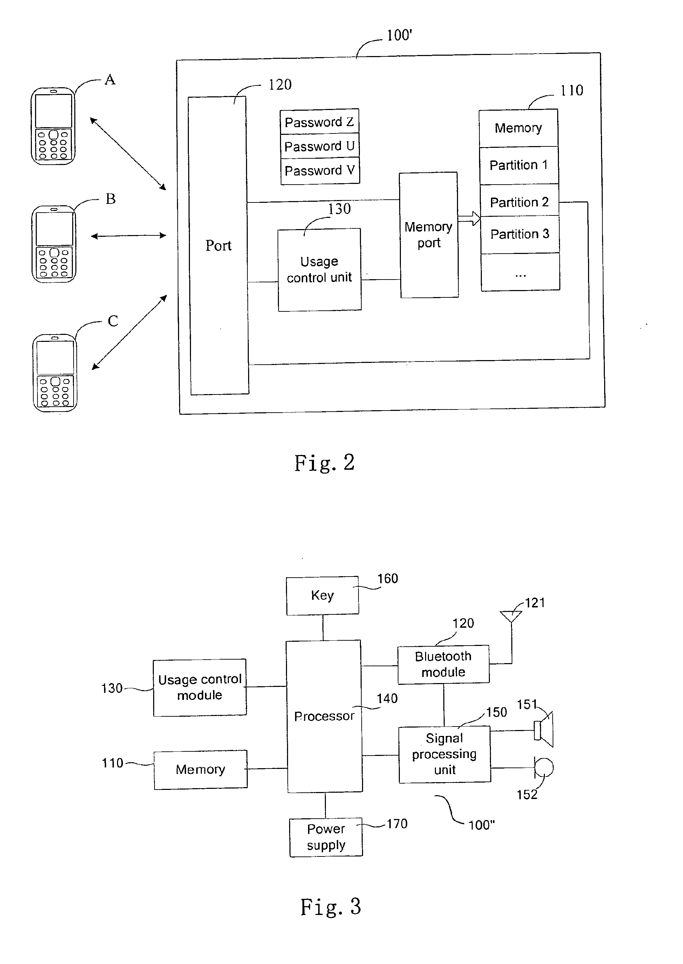

The port 120 may be a wired port or a wireless port for establishing a connection with the terminal (e.g., electronic device such as mobile phone, computer, PDA, media player, etc.). Exemplary terminals A, B and C are illustrated in Fig. 2 as respective portable electronic devices, e.g., mobile phones. For the wired headset, the port 120 is a wired port, through which the headset 100 is directly connected to the terminal to establish a connection with the terminal. For the wireless headset (e.g., Bluetooth headset), the port 120 is a wireless port, through which a connection with the terminal is established by wirelessly searching the terminal and matching therewith, after the headset 100 is turned on.

In the embodiments of the present invention, as the usage right of the headset shall be limited (in that case, the headset is under a protected state), the headset is initially forbidden to be used after a connection is established between the headset and the terminal. The headset is allowed to be used only after the user's identification is authenticated. In that case, the usage control unit 130 is configured to send, after the headset 100 establishes the connection with the terminal through the port 120, to the terminal a request of inputting authentication password, receive the authentication password inputted from the terminal, authenticate the received authentication password using an authentication password stored in the memory 110, and control the execution of the predetermined function of the headset based on the authentication result. Herein the predetermined function for example includes, but not limited to, at least one of multiple functions, such as phone answering, hang-up, volume control, caller identification, audio output, media playing, and data reading and writing.

When the authentication password stored in the memory of the headset consists of digits, symbols, a combination of digits and symbols, or the like, the terminal for example inputs the authentication password through a keyboard or a touch screen; when the authentication password stored in the memory of the headset consists of sound (e.g., the user's sound), the terminal for example inputs the authentication password through a microphone; and when the authentication password stored in the memory of the headset consists of fingerprint or facial image, etc., the terminal for example acquires the fingerprint or facial image through a camera.

After receiving the authentication password inputted from the terminal, the usage control unit 130 may authenticate the received authentication password using the authentication password stored in the memory 110, e.g., comparing the received authentication password with the stored authentication password; if they are matched, the authentication succeeds, and the headset is allowed to execute the predetermined function (e.g., the headset is allowed to be used to answer a phone call, listen to music, control the volume, etc.); if they are not matched, the authentication fails, and the headset is forbidden to execute the predetermined function (e.g., the headset is forbidden to be used to answer a phone call, listen to music, control the volume, etc.).

In case that a plurality of authentication passwords are stored in the memory 110, a plurality of users are allowed to adopt different authentication passwords to perform the authentication, respectively, for using the headset. At that time, the usage control unit 130 is further configured to determine (determine may mean, for example, to indicate, to identify, to label or to set, as in setting a flag, switch or the like, and so on) the authentication as successful once the received authentication password matches one of the plurality of authentication passwords stored, and the headset 100 is allowed to execute its predetermined function. When the received authentication password does not match any of the plurality of authentication passwords stored in the memory 110, the authentication fails, and the headset 100 is forbidden to execute its predetermined function.

In another embodiment of the present invention, when a plurality of authentication passwords is stored in the memory 110, different users are allowed to acquire different headset usage rights for different authentication passwords. In that case, each authentication password corresponds to one usage right. The memory stores not only the plurality of authentication passwords, but also the usage right corresponding to each authentication password. Thus, the usage control unit 130 is further configured to determine the authentication as successful when the received authentication password matches one of the plurality of authentication passwords stored, and control the execution of the predetermined function of the headset according to a usage right corresponding to the matched authentication password.

Table 1 gives examples of different authentication passwords and corresponding usage rights.

**Table 1**

| Authentication Password | Usage Right |
|---|---|
| X | Phone answering and volume control |
| Y | Phone answering, volume control, caller identification |

For example, after establishing a connection with a mobile phone A, the headset 100 may send a request of inputting authentication password to the mobile phone A, and the request is displayed on the interface of the mobile phone A. After an authentication password is inputted to the mobile phone A, the usage control unit 130 of the headset 100 receives the password from the mobile phone A and authenticates the received password. When the received password matches a password X stored in the memory 110, the usage control unit 130 allows the user to adopt the headset 100 for phone answering and volume control..When the received password matches a password Y stored in the memory 110, the usage control unit 130 allows the user to adopt the headset 100 for phone answering, volume control and caller identification.

In case that the memory of the headset has a large capacity, the memory may be divided into a plurality of partitions, as shown in Fig. 2, and the headset may be used as a USB disk capable of exchanging data with the terminal. At that time, different authentication passwords may be arranged to be corresponding to access rights for accessing different partition of the memory, as shown in Table 2. For example, a password Z set by the user of the mobile phone A is arranged to be corresponding to partition 1 of the memory, a password U set by the user of a mobile phone B is arranged to be corresponding to partition 2 of the memory, and a password V set by the user of a mobile phone C is arranged to be corresponding to partition 3 of the memory. Thus, when the password received from the mobile phone A (or other mobile phone) matches the password Z stored in the memory 110, the usage control unit 130 controls, through the memory port, the mobile phone A (or other mobile phone) to only access partition 1 of the memory 110 of the headset 100', i.e., data can be read from and written into partition 1. In addition, according to Table 2, when the password inputted from the mobile phone matches the authentication password Z, the usage control unit 130 also allows the headset 100' to execute the functions of phone answering and volume control. When the password received from the mobile phone B (or other mobile phone) matches the password U stored in the memory 110, the usage control unit 130 controls, through the memory port, the mobile phone B (or other mobile phone) to only access partition 2 of the memory 110 of the headset 100'. When the password received from the mobile phone C (or other mobile phone) matches the password V stored in the memory 110, the usage control module (also referred to herein as usage control unit) 130 controls, through the memory port, the mobile phone C (or other mobile phone) to only access partition 3 of the memory 110 of the headset 100', as shown in Fig. 2. The partitions of the memory of the headset 100' may also be arranged in advance to be corresponding to different purposes, e.g., partition 1 is corresponding to entertainment information, partition 2 is corresponding to foreign language study, etc., and the partitions are provided with corresponding data. Thus, different mobile phone users (e.g., different family members) may access different partitions using different passwords, respectively, so as to realize different purposes (entertainment or study).

**Table 2**

| Authentication Password | Usage Right |
|---|---|
| Z | Phone answering, volume control, caller ID, USB disk function (for partition 1 of the memory) |
| U | USB disk function (for partition 2 of the memory) |
| V | USB disk function (for partition 3 of the memory) |

Fig. 3 illustrates a schematic block diagram of a headset 100" according to another exemplary embodiment of the present invention. The headset as illustrated in Fig. 3 is a Bluetooth headset 100". As illustrated in Fig. 3, the headset 100" includes: a memory 110, a Bluetooth module 120, a usage control unit 130, a processor (also called a CPU or microprocessor) 140, a signal processing unit 150, a key 160 and a power supply 170.

In this embodiment, the Bluetooth module 120 may serve as a wireless port for establishing a connection with the terminal by antenna 121. The memory 110 and the usage control unit 130 may execute functions the same as those in Fig. 1, and herein are omitted.

The signal processing unit 150 is configured to decode a speech signal received via the Bluetooth module 120, converts into an analog signal and outputs via a speaker 151. In addition, the signal processing unit 150 is further configured to convert the analog signal inputted from the microphone 152 into a digital signal and perform a speech coding thereof, for a transmission by the Bluetooth module. Thus, the headset 100" may realize functions such as phone answering and audio output, e.g., for use in carrying on a telephone conversation or for listening to music, and so on.

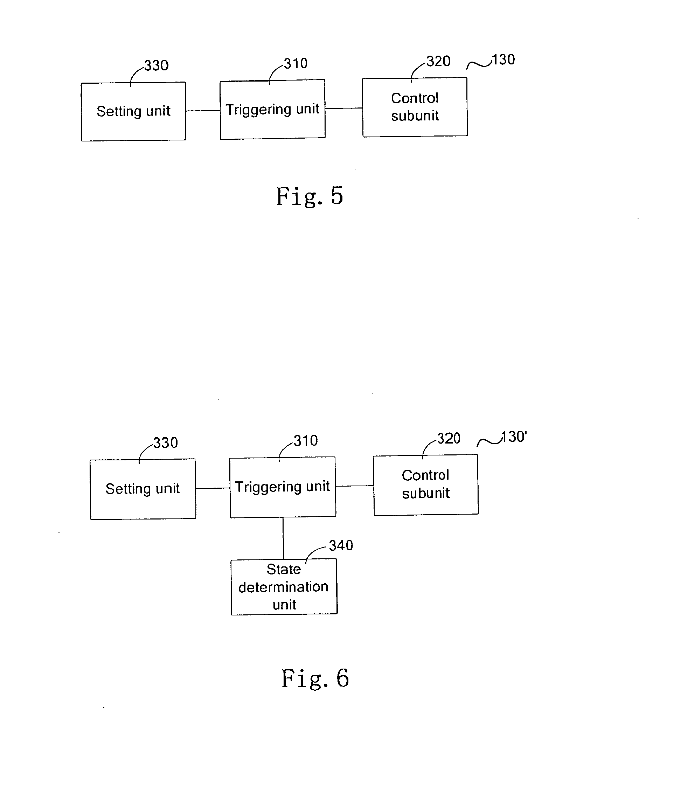

Fig. 5 illustrates a schematic block diagram of the usage control unit 130 according to the exemplary embodiment of the present invention. As illustrated in Fig. 5, the usage control unit 130 may include: a triggering unit 310 configured to send, after a connection is established between the headset and the terminal, a request of inputting authentication password to the terminal; and a control subunit 320 configured to receive the authentication password inputted from the terminal, authenticate the received authentication password using the stored authentication password, and control the execution of the predetermined function of the headset based on the authentication result. For example, the control subunit 320 may perform an authentication by comparing the received authentication password with the stored authentication password, and allow the headset to execute the predetermined function when the authentication succeeds, or forbid the headset to execute the predetermined function when the authentication fails.

Herein, the predetermined function for example may include at least one of phone answering, hang-up, volume control, caller identification, audio output, media playing, data reading and writing, etc.

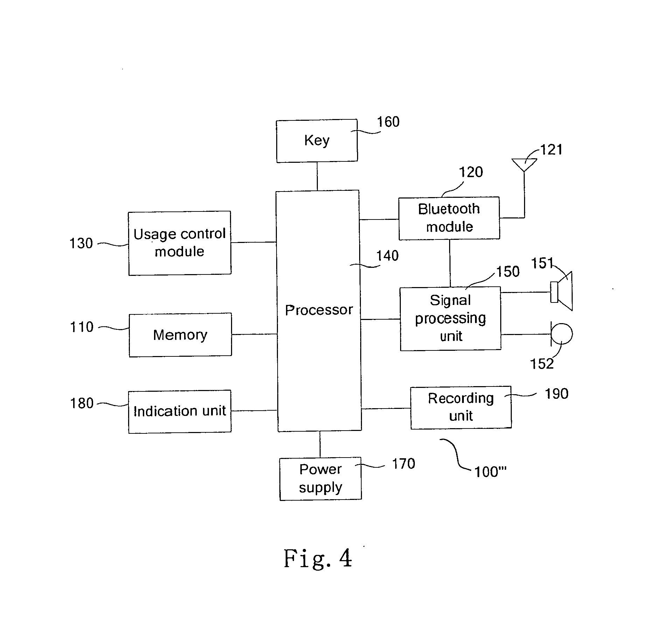

In another exemplary embodiment of the present invention, as illustrated in Fig. 4, a headset 100"' may further include an indication unit 180 configured to send, when the authentication succeeds, to the terminal information indicating that the authentication is successful. The information may be displayed on the display screen of the terminal, so that the user uses the headset according to the information. When the authentication fails, the indication unit 180 may also send to the terminal information indicating that the authentication is failed, so as to prompt or to inform or advise the user.

In an exemplary embodiment of the present invention, the headset may be always arranged under a protected state. In that case, each time the headset establishes a connection with the terminal, the usage control unit 130 of the headset needs to authenticate the user's ID using the authentication password.

In another exemplary embodiment, the state of the headset may be optionally set or modified. In details, the initial state of the headset may be either a protected state, or an unprotected state. When the initial state of the headset is the protected state, the headset state information may be set (modified) as the unprotected state after the headset establishes a connection with the terminal and the terminal passes the authentication, and the authentication password can also be modified. When the initial state of the headset is the unprotected state, the headset state information may be set (modified) as the protected state after the headset establishes a connection with the terminal.

As is illustrated in Fig. 5, for example, order to optionally modify or set the headset state information, in another embodiment of the present invention, the usage control unit 130 may further include a setting unit 330 configured to modify the headset state information when the control subunit 320 succeeds in the authentication or the headset state information is the unprotected state. As an example, the setting unit 330 may be configured in a form of key on the headset, for switching between different headset state information (protected state and unprotected state), but the present invention is not limited thereto. Alternatively, the setting unit 330 may be put in the terminal. The headset state information (protected state and unprotected state) may be stored in the memory 110, and updated correspondingly by the setting unit 330 when the headset state information is modified.

In an exemplary embodiment, the triggering unit 310 (e.g., shown in the illustration of Fig. 5) is further configured to output an indication signal to the control subunit 320 when the headset is in the unprotected state, and the control subunit 320 may directly allow the headset to execute the predetermined function according to the indication signal.

In the case that the headset state information has been modified as the unprotected state, when a connection is reestablished between the headset and the terminal, the usage control unit 130 need not control the usage right of the headset, and the user can freely use the headset. But in that case, the headset is no longer protected, and if the headset is lost in such state, any user picking or stealing the headset can still use it. In order to avoid this condition, in an exemplary embodiment, optionally as illustrated in Fig. 4, the headset may further include: a recording unit 190 configured to write, when succeeding in the authentication, an identity of the terminal connected to the headset into a terminal identity list stored in the memory 110, so as to indicate identities of terminals having succeeded in the authentication. At that time, the usage control unit 130' may further include a state determination unit 340 as illustrated in Fig. 6. After a connection is established between the headset and the terminal, the state determination unit 340 firstly identifies whether an identity of the terminal having established the connection is stored in the terminal identity list, and if not, the current state of the headset is determined as the protected state, regardless whether the headset state information stored in the memory 110 is the unprotected state or not. Thus, the unprotected state is adopted only for the terminals having succeeded in the authentication, and the protected state may be adopted automatically for the users having not succeeded in the authentication, so that the security of the headset is further improved.

In an exemplary embodiment, the identity of the terminal may be at least one of terminal user name (e.g., real user name or nickname preset at the terminal), terminal model, International Mobile Equipment Identity (IMEI) and subscriber identity number of Subscriber Identity Module (SIM), but the present invention is not limited thereto, and the terminal may be identified by other appropriate information. For example, when the terminal is a mobile phone, the recording unit 190 may extract, after the usage control unit 130 succeeds in the authentication, from the mobile phone one of the user name (e.g., real name or nickname preset at the terminal) of the mobile phone, the model of the mobile phone, the IMEI and the mobile phone number, and store the extracted identity in the terminal identity list in the memory of the headset. Thus, when a connection is established again between the headset and the mobile phone, the mobile phone will be determined as having succeeded in the authentication once the state determination unit 340 identifies that the identity of the mobile phone currently establishing the connection has been stored in the terminal identity list. For other type of mobile terminal, the recording unit 190 may extract, after the usage control unit 130 succeeds in the authentication, from the mobile terminal one of the user name (e.g., preset real name or nickname), the terminal model and the IMEI, and store it in the terminal identity list in the memory of the headset. Alternatively, for any type of terminal such as mobile phone, computer, media player, etc., the recording unit 190 may extract, after the usage control unit 130 succeeds in the authentication, the user name firstly, then the terminal model when the user name is not available, ... , or extract the identity in other order. Alternatively, multiple (e.g., two) identities may be extracted at one time from the terminal, and the terminal will be determined as having succeeded in the authentication once the state determination unit identifies any of the extracted identities from the terminal identity list. The way and order for the recording unit 190 to extract the terminal identity may be preset in the headset.

As described above, in the present embodiment, the usage right of the headset is limited, so that a person stealing or picking the headset cannot use it. Thus, the headset is prevented from being stolen, and since a person picking the headset cannot use it, he/she will also try to return the headset to the loser. Therefore, the present invention enhances the protection of the headset, and hence improves the security of the headset.

It shall be appreciated that, many parts of the embodiments of the present invention may be implemented by hardware, software, firmware or a combination thereof.

During the implementation of the present invention, operations before the usage of the headset may be carried out at the terminal side through an interface. The operations include: setting, in case that the default state of the headset is the unprotected state, the "protection" function of the headset in the special submenu or option of relevant menu of the terminal after a connection is established between the headset and the terminal, and setting, in case that the protection function is enabled (e.g., the state of the headset is modified as the protected state), an authentication password and enters the protected state after the password is set. The password may be modified in case it already existed. The set or modified password is stored in the memory of the headset. Thus, when a connection is again established between the headset and the terminal, a password input window will occur on the screen of the terminal, so as to perform an authentication with the usage control unit 130 of the headset according to the inputted password, and relevant functions of the headset can be used only after the authentication succeeds. In case that the authentication password (e.g., password X) of the headset is set using a terminal (e.g., terminal A), other terminal (e.g., terminal B) can also acquire the usage right of the headset using the password X. For example, when a connection is established with the headset using terminal B, the user can pass the authentication using password X only if he knows the password X, and thus he can use some functions of the headset.

When the default state of the headset is the protected state, the set of "protection" function of the headset (e.g., disabling the protection function, i.e., modifying the state of the headset as the unprotected state, or modifying the password) is preferably performed in the special submenu or option of relevant menu of the terminal after the authentication succeeds. The operation is just exemplary and the present invention is not limited therebto. A person skilled in the art may easily acquire multiple operation ways according to the descriptions of the present invention.

The method for controlling usage of a headset of the present invention will be briefly described as follows in conjunction with the previous descriptions.

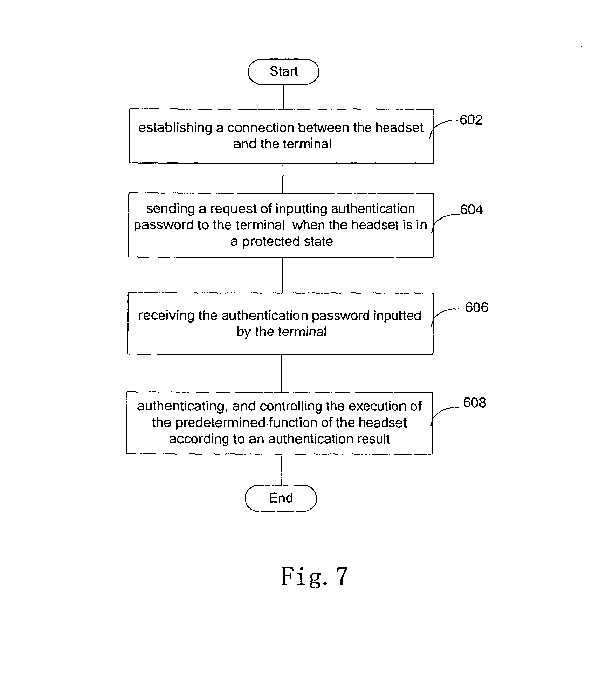

Fig. 7 illustrates a flowchart of a method for controlling usage of a headset according to an embodiment of the present invention. As illustrated in Fig. 7, the method includes:
Step S602: establishing a connection between the headset and the terminal.
Step S604: after the connection is established, sending to the terminal a request of inputting authentication password when the headset is in a protected state.
Step S606: receiving the authentication password inputted by the terminal.
Step S608: authenticating the received authentication password by means of an authentication password pre-stored in a memory, and controlling the execution of the predetermined function of the headset according to an authentication result. In more details, the step S608 may authenticate by comparing the received authentication password with the pre-stored authentication password; if the authentication succeeds, the headset is allowed to execute the predetermined function, and if the authentication fails, the headset is forbidden to execute the predetermined function.

Herein, the predetermined function for example may include at least one of phone answering, hang-up, volume control, caller identification, audio output, media playing, and data reading and writing.

The method may further include (not illustrated): sending to the terminal information indicating that the authentication is successful when the authentication succeeds, and sending to the terminal information indicating that the authentication is failed when the authentication fails.

The memory may store one or more authentication passwords. When a plurality of authentication passwords are stored in the memory, the authentication is determined as successful in step S608 if the received authentication password matches one of the plurality of authentication passwords stored in the memory, and then the headset is allowed to execute the predetermined function.

When a plurality of authentication passwords are stored in the memory, each authentication password may be corresponding to one usage right. In that case, the authentication is determined as successful in step S608 if the received authentication password matches one of the plurality of authentication passwords stored in the memory, and the headset is controlled to execute the predetermined function according to the usage right corresponding to the matched authentication password.

In an embodiment of the present invention, the headset in the unprotected state is directly allowed to execute the predetermined function.

The initial headset state information may be either the protected state or the unprotected state, and may be stored in the memory. In addition, the headset state information may be modified. In an exemplary embodiment, the method of the present invention further includes: in step S604, modifying the stored headset state information when the authentication succeeds or the headset state information is the unprotected state.

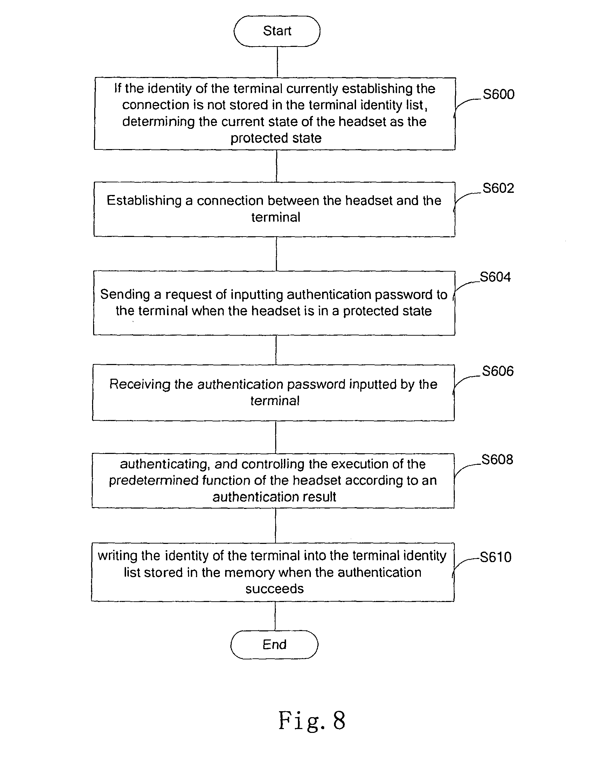

In an exemplary embodiment, as illustrated in Fig. 8, the method further includes: step S610, writing the identity of the terminal into the terminal identity list stored in the memory when the authentication succeeds.

In another exemplary embodiment, the method further includes: step S600, after the connection is established between the headset and the terminal, identifying whether the identity of the terminal currently establishing the connection has been stored in the terminal identity list, and if not, determining the current state of the headset as the protected state, regardless whether the headset state information stored in the memory 110 is the unprotected state or not.

The above method can effectively limit the usage right of the headset, so as to enhance the protection of the headset, and hence improve the security of the headset.

The structure of a terminal capable of using the headset is described as follows.

In the embodiment of the present invention, the term "terminal" includes any apparatus capable of executing corresponding function using the headset, such as media player, mobile phone, PDA, smart phone, etc., but the present invention is not limited thereto.

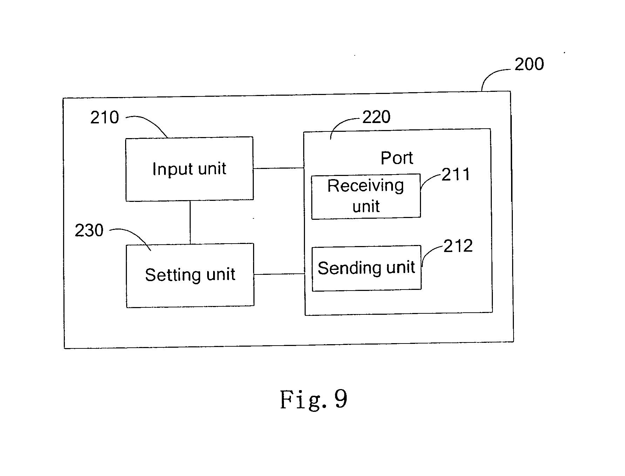

As illustrated in Fig. 9, the terminal 200 may include: a receiving unit 211 configured to receive a request of inputting authentication password from the headset, after a connection is established between the headset and the terminal; an input unit 210 configured to input the authentication password; and a sending unit 212 configured to send the authentication password inputted by the input unit to the headset.

Herein, the receiving unit 211 and the sending unit 212 may be implemented in a port 220. The port 220 may be a wired port or a wireless port, for establishing a connection with the headset and communicating therewith. In case the port of the headset is a wired port, the port of the terminal is also a wired port; and in case the port of the headset is a wireless port (e.g., Bluetooth module), the port of the terminal is correspondingly a wireless port.

When the authentication password stored in the memory of the headset consists of digits, symbols, a combination of digits and symbols, or the like, the input unit 210 for example may be a keyboard, a touch screen, etc.; when the authentication password stored in the memory of the headset consists of sound (e.g., the user's sound), the input unit 210 for example may be a microphone; and when the authentication password stored in the memory of the headset consists of fingerprint or facial image, etc., the input unit 210 for example may be a camera, but the present invention is not limited thereto.

In an exemplary embodiment, the receiving unit 211 is further configured to receive from the headset information indicating that the authentication is successful or failed.

In another exemplary embodiment, the terminal 200 may include a setting unit 230 configured to modify the headset state information stored in the memory of the headset as the unprotected state, when the receiving unit 211 receives information indicating that the authentication is successful. The setting unit 230 may be further configured to modify the headset state information stored in the memory of the headset as the protected state, when the headset state information is the unprotected state.

For example, only when the information indicating that the authentication is successful is received, the setting unit 230 will allow the headset state information (the protected state) to be modified at the operation interface of the mobile phone, and the modified state information is stored in the memory of the headset. Or, in case that the headset state information is the unprotected state, the setting unit 230 allows modifying the headset state information as the protected state and storing it in the memory of the headset. When the receiving unit 211 receives the information indicating that the authentication is failed, the setting unit 230 will not allow modifying the headset state information at the terminal. In case that the terminal is provided with the setting unit 230, the usage control unit 130 of the headset may be not provided with the setting unit 330.

In another exemplary embodiment, the setting unit 230 is further configured to modify or set an authentication password stored in the memory of the headset and store the modified or set authentication password in the memory of the headset, when the receiving unit 211 receives the information indicating that the authentication is successful or the headset state information is the unprotected state.

In details, when the receiving unit 211 receives the information indicating that the authentication is successful, the setting unit 230 may modify the authentication password stored in the memory of the headset, or add one or more new authentication passwords. When the headset state information is the unprotected state, the setting unit 230 may preferably set one or more new authentication passwords, and store the set authentication passwords in the memory of the headset. Of course, one or more authentication passwords having been stored in the memory of the headset are also allowed to be modified, but the original password shall be confirmed before the modification so as to prevent a person not knowing the original password from modifying the password maliciously. The setting unit 230 stores the modified or set authentication password in the memory of the headset. When the receiving unit 211 receives the information indicating that the authentication is failed, the setting unit 230 will not allow setting (e.g., adding) or modifying the authentication password at the terminal.

When the setting unit 230 sets a plurality of passwords, it may be further configured to modify and set the usage rights of the predetermined function of the headset corresponding to respective authentication passwords. The modified or set usage rights of the predetermined function are stored in the memory of the headset in one-to-one correspondence with respective authentication passwords. The predetermined function may include, but not limited to, at least one of phone answering, hang-up, volume control, caller identification, audio output, media playing and data reading and writing.

For example, the setting unit 230 may set different authentication passwords to be corresponding to the access rights for accessing different partitions of the memory of the headset, but the present invention is not limited thereto.

It will be appreciated that portions of the present invention can be implemented in hardware, software, firmware, or a combination thereof. In the described embodiment(s), a number of the steps or methods may be implemented in software or firmware that is stored in a memory and that is executed by a suitable instruction execution system. If implemented in hardware, for example, as in an alternative embodiment, implementation may be with any or a combination of the following technologies, which are all well known in the art: discrete logic circuit(s) having logic gates for implementing logic functions upon data signals, application specific integrated circuit(s) (ASIC) having appropriate combinational logic gates, programmable gate array(s) (PGA), field programmable gate array(s) (FPGA), etc.

All or a part of the steps in the methods according to the above embodiments may be implemented by instructing relevant hardware through a program that is stored in a computer readable storage medium, such as ROM/RAM, magnetic disk, optical disk, etc.

Any process or method descriptions or blocks in flow charts or otherwise described herein may be understood as representing modules, segments, or portions of code which include one or more executable instructions for implementing specific logical functions or steps in the process, and alternate implementations are included within the scope of the preferred embodiment of the present invention in which functions may be executed out of order from that shown or discussed, including substantially concurrently or in reverse order, depending on the functionality involved, as would be understood by those reasonably skilled in the art of the present invention.

The above embodiments make further and detailed descriptions of the object, technical solution and beneficial effect of the present invention. It shall be appreciated that, the above descriptions are just exemplary embodiments of the present invention, and do not intend to limit the protection scope of the present invention. Any amendment, equivalent substitution, modification, etc. made within the spirit and principle of the present invention shall be covered by the protection scope of the present invention.

## Claims

1. A headset (100), comprising:
a memory (110) configured to store an authentication password; and
a usage control unit (130; 130') configured to send, after a connection is established between the headset (100) and a terminal (A-C; 200), a request of inputting authentication password to the terminal (A-C; 200) when the headset (100) is in a protected state, receive an authentication password inputted from the terminal (A-C; 200), authenticate the received authentication password using the stored authentication password, and control an execution of a predetermined function of the headset (100) based on an authentication result.

2. The headset (100) according to claim 1, wherein the usage control unit (130; 130') comprises:
a triggering unit (310) configured to send, after the connection is established between the headset (100) and the terminal (A-C; 200), the request of inputting authentication password to the terminal when the headset is in the protected state; and
a control subunit (320) configured to receive the authentication password inputted from the terminal (A-C; 200), perform an authentication by comparing the received authentication password with the stored authentication password, and allow the headset (100) to execute the predetermined function when the authentication succeeds, or forbid the headset to execute the predetermined function when the authentication fails.

3. The headset (100) according to either one of claims 1 or 2, wherein the triggering unit (310) is further configured to output an indication signal to the control subunit (320) when the headset (100) is in an unprotected state, and the control subunit (320) allows the headset to execute the predetermined function according to the indication signal;
wherein the memory (110) further stores headset state information, which is the protected state or the unprotected state; and
wherein the usage control unit (130; 130') further comprising:
a setting unit (330) configured to modify the stored headset state information when the control subunit (320) succeeds in the authentication or the headset state information is the unprotected state.

4. The headset (100) according to any of claims 1-3, further comprising:
a recording unit (190) configured to write an identity of the terminal (A-C; 200) into a terminal identity list stored in the memory (110), when the authentication succeeds; and
wherein the usage control unit (130; 130') further comprises:
a state determination unit (340) configured to identify, after the connection is established between the headset (100) and the terminal (A-C; 200), whether the identity of the terminal currently establishing the connection has been stored in the terminal identity list, and if not, determine a current state of the headset as the protected state.

5. The headset (100) according to any of claims 1-4, wherein:
the memory (110) stores a plurality of authentication passwords, each corresponding to a usage right; and
the usage control unit (130; 130') is further configured to determine the authentication as successful when the received authentication password matches one of the plurality of authentication passwords stored, and control the execution of the predetermined function of the headset (100) according to a usage right corresponding to the matched authentication password.

6. The headset (100) according to any of claims 1 to 5, wherein:
the predetermined function comprising at least one of phone answering, hang-up, volume control, caller identification, audio output, media playing, and data reading and writing.

7. A method for controlling usage of a headset (100), comprising:
establishing a connection between the headset (100) and a terminal (A-C; 200);
after the connection is established, sending a request of inputting authentication password to the terminal (A-C; 200) when the headset (100) is in a protected state;
receiving an authentication password inputted from the terminal (A-C; 200); and
authenticating the received authentication password using an authentication password pre-stored by a memory (110), and controlling an execution of a predetermined function of the headset (100) based on an authentication result.

8. The method according to claim 7, wherein the step of authenticating comprising:
authenticating by comparing the received authentication password with the pre-stored authentication password; and
allowing the headset (100) to execute the predetermined function when the authentication succeeds, or forbidding the headset to execute the predetermined function when the authentication fails.

9. The method according to either one of claims 7 or 8, further comprising:
storing headset state information, which is the protected state or the unprotected state; and
modifying the headset state information stored when the authentication succeeds in the step of authenticating or the headset state information is the unprotected state.

10. The method according to any of claims 7-9, further comprising:
writing an identity of the terminal (A-C; 200) into a terminal identity list stored in the memory (110), when the authentication succeeds; and
after the connection is established between the headset (100) and the terminal (A-C; 200), identifying whether the identity of the terminal currently establishing the connection has been stored in the terminal identity list, and if not, determining a current state of the headset as the protected state.

11. The method according to any of claims 7-10, wherein:
a plurality of authentication passwords are pre-stored; and
in the step of authenticating, determining the authentication as successful when the received authentication password matches one of the plurality of authentication passwords stored in the memory (110), and then allowing the headset (100) to execute the predetermined function; and
wherein:
a plurality of authentication passwords are pre-stored, each corresponding to a usage right; and
in the step of authenticating, determining the authentication as successful when the received authentication password matches one of the plurality of authentication passwords stored, and controlling the execution of the predetermined function of the headset according to a usage right corresponding to the matched authentication password; and
wherein:
the predetermined function comprising at least one of phone answering, hang-up, volume control, caller identification, audio output, media playing, and data reading and writing.

12. A terminal (A-C; 200), comprising:
a receiving unit (211) configured to receive a request of inputting authentication password from a headset (100) after a connection is established between the headset (100) and the terminal (A-C; 200);
an input unit (210) configured to input the authentication password; and
a sending unit (212) configured to send the inputted authentication password to the headset (100).

13. The terminal (A-C; 200) according to claim 12, wherein:
the receiving unit (211) is further configured to receive from the headset (100) information indicating that an authentication is successful; and
further comprising:
a setting unit (230) configured to modify headset state information stored in a memory (110) of the headset (100) into an unprotected state when the receiving unit (211) receives the information indicating that the authentication is successful.

14. The terminal (A-C; 200) according to claim 13, wherein:
the setting unit (230) is further configured to modify the headset state information stored in the memory (110) of the headset (100) into a protected state when the headset state information is the unprotected state; and
wherein:
the setting unit (230) is further configured to modify or set an authentication password and store the modified or set authentication password in the memory (110) of the headset (100), when the receiving unit (211) receives the information indicating that the authentication is successful or the headset state information is the unprotected state.

15. The terminal (A-C; 200) according to either one of claims 13 or 14, wherein:
the setting unit (230) is further configured to modify or set usage rights of predetermined function of the headset (100) corresponding to respective authentication passwords, and
wherein:
the predetermined function comprising at least one of phone answering, hang-up, volume control, caller identification, audio output, media playing, and data reading and writing.
